# EUROPEAN PATENT APPLICATION

(11) **EP 4 764 094 A1**
(43) Date of publication of application: **24.06.2026**
(21) Application number: 24882182.9
(22) Date of filing: 09.10.2024
(51) Int. Cl.: E02F 9/26, E02F 9/20, G01C 15/00

(54) **MEASUREMENT DEVICE, MEASUREMENT METHOD, AND MEASUREMENT PROGRAM FOR WORK MACHINE**

(30) Priority: 24.10.2023 JP 2023182581; 20.05.2024 JP 2024081571
(71) Applicant: KOBELCO CONSTRUCTION MACHINERY CO., LTD., Hiroshima-shi, Hiroshima 731-5161 (JP)
(72) Inventor: SEKIGUCHI, Shingo, Tokyo 141-8626 (JP); TAKAGI, Norio, Tokyo 141-8626 (JP)
(74) Representative: TBK
(86) International application number: PCT/JP2024/036084
(87) International publication number: WO 2025/089066

(57) **Abstract**

Provided is an apparatus for measuring the position and azimuth of a work machine (40), including a specified-point position calculation unit and an azimuth calculation unit. Based on the position of an index mark attached to a work mechanism (44) of the work machine (40) and posture information on the posture of the work mechanism (44), the specified-point position calculation unit calculates a specified-point position, which is the position of a specified point on the work mechanism (44), in a fixed control cycle. Only when a measurement permission condition is satisfied, the azimuth calculation unit calculates the azimuth of the machine body (42) of the work machine (40) based on a previous specified-point position, which is the specified-point position calculated last time by the specified-point position calculation unit, and a current time specified-point position, which is the specified-point position calculated this time. The measurement permission condition includes that current azimuth information corresponding to the current specified-point position is different from previous azimuth information corresponding to the previous specified-point position.

## Description

### Technical Field

The present invention relates to a technique for measuring the position and azimuth of a work machine such as a construction machine.

### Background Art

There is proposed a technique for acquiring information on a work machine. For example, Patent Literature 1 discloses: continuously measuring the position of a target part that moves in association with the relative movement of a work mechanism with respect to a turning body in a hydraulic excavator; and acquiring three-dimensional information on the hydraulic excavator from the trajectory of the measured target part, for example, an arc-shaped trajectory.

The continuous measurement of the trajectory of the target part to an extent enough to acquire the three-dimensional information on the hydraulic excavator and the calculation of the three-dimensional information based on the trajectory, however, requires a complicated configuration.

### Citation List

### Patent Literature

Patent Literature 1: Japanese Unexamined Patent Publication No. 2022-079873

### Summary of Invention

It is an object of the present invention to provide an apparatus and the like capable of measuring the position and the azimuth of a work machine with a simple configuration.

Provided is a measurement apparatus for measuring a position and an azimuth of a work machine including a machine body and a work mechanism that extends from the machine body and is movable to change a posture. The measurement apparatus includes an index mark, an index-mark position detector, a posture information acquisition unit, a specified-point position calculation unit, and an azimuth calculation unit. The index mark is attached to the work mechanism. The index-mark position detector detects an index-mark position which is a position of the index mark. The posture information acquisition unit acquires posture information that is information on the posture of the work mechanism. Based on the index-mark position detected by the index-mark position detector and the posture information acquired by the posture information acquisition unit, the specified-point position calculation unit calculates a specified-point position, which is a position of a specified point that is prespecified at a position different from the index-mark position in the work mechanism, in a fixed control cycle. Only when a predetermined measurement permission condition is satisfied, the azimuth calculation unit calculates an azimuth of the machine body based on a previous specified-point position, which is the specified-point position calculated last time by the specified-point position calculation unit, and a current specified-point position, which is the specified-point position calculated this time by the specified-point position calculation unit. The measurement permission condition includes that current posture information, which is the posture information corresponding to the current specified-point position, is different from previous posture information, which is the posture information corresponding to the previous specified-point position.

### Brief Description of Drawings

FIG. 1A is a perspective view showing a work machine according to an embodiment of the present invention.
FIG. 1B is a block diagram showing a real-machine control device and the like installed on the work machine.
FIG. 2 is a flowchart showing a measurement method to be executed by the real-machine control device.

### Detailed Description

Preferred embodiments of the present invention will be described with reference to the drawings.

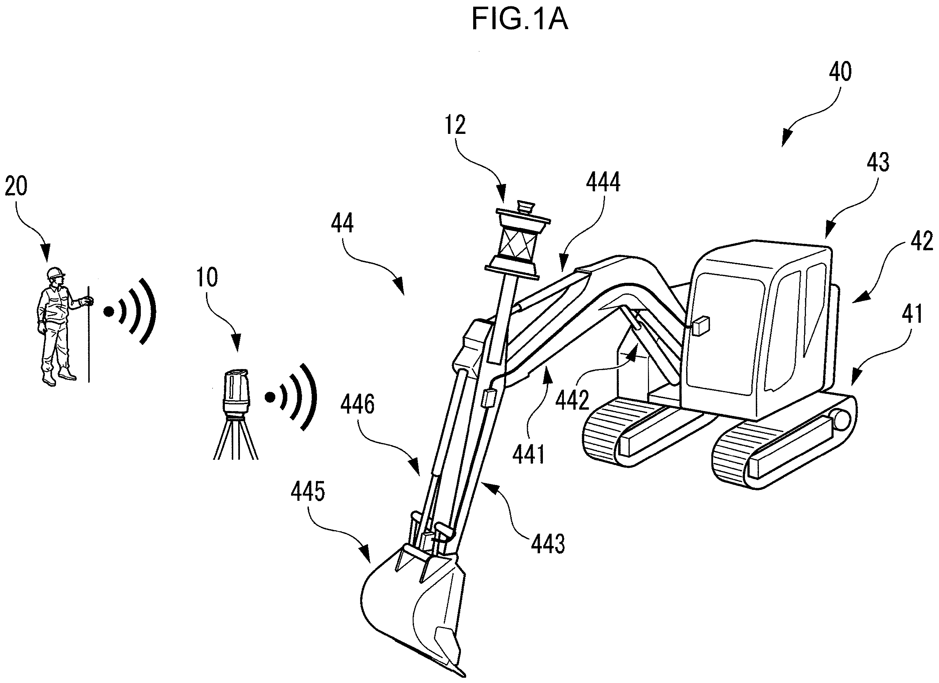

FIG. 1A shows a total station 10, an information processing device 20, and a work machine 40, according to the embodiment. The work machine 40 has a function of making wireless communication with each of the total station 10 and the information processing device 20.

The work machine 40 illustrated in FIG. 1A is a crawler-type hydraulic excavator. Specifically, the work machine 40 includes a crawler-type lower traveling body 41, an upper turning body 42 mounted on the lower traveling body 41 via a slewing drive mechanism so as to be capable of turning, and a work mechanism 44. The upper turning body 42 includes a turning frame and a cab 43. The cab 43 is an operation chamber, in which a seat for an operator is disposed. The cab 43 is mounted on the left front part of the turning frame. The work mechanism 44 is attached to the right front part of the turning frame. The cab 43 may be configured to be driven up and down with respect to the turning frame by a not-graphically-shown lifting drive mechanism including a link mechanism and an actuator.

The upper turning body 42 serves as a machine body according to the present invention, attached to the upper turning body 42 so as to be capable of performing a work motion. The work motion involves a change in the posture of the work mechanism 44. Specifically, the work mechanism 44 includes: a boom 441 attached to the upper turning body 42 so as to be capable of derricking; an arm 443 connected to a distal end of the boom 441 so as to be rotationally movable; and a distal attachment 445 connected to a distal end of the arm 443 so as to be rotationally movable. The distal attachment 445 illustrated in FIG. 1A is a bucket. The distal attachment 445, alternatively, may be either of a grapple, a high reach hook, a breaker, and a lifting magnet.

To the work mechanism 44 are attached a plurality of actuators for changing the posture of the work mechanism 44, specifically, a plurality of extendable hydraulic cylinders. The plurality of hydraulic cylinders include a boom cylinder 442, an arm cylinder 444, and a distal attachment cylinder 446. The boom cylinder 442 is interposed between the boom 441 and the upper turning body 42 so as to be expanded and contracted by supply of hydraulic fluid to thereby rotationally move the boom 441 in the derricking direction. The arm cylinder 444 is interposed between the arm 443 and the boom 441 so as to be expanded and contracted by supply of hydraulic fluid to thereby rotationally move the arm 443 about a horizontal axis with respect to the boom 441. The distal attachment cylinder 446 is interposed between the distal attachment 445 and the arm 443 so as to be expanded and contracted by supply of hydraulic fluid to thereby rotationally move the distal attachment 445 around a horizontal axis with respect to the arm 443.

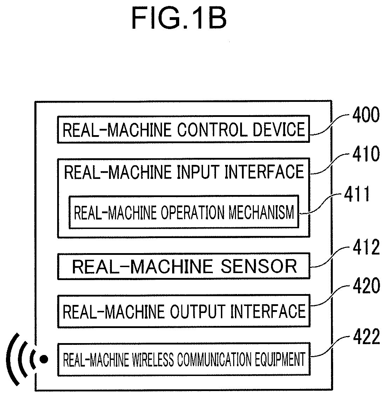

The work machine 40 further includes a plurality of elements shown in FIG. 1B, namely, a real-machine control device 400, a real-machine input interface 410, a plurality of real-machine sensors 412, a real-machine output interface 420, and a real-machine wireless communication device 422.

The real-machine control device 400 includes an arithmetic processing device, for example, a single-core processor or a multi-core processor or a processor core constituting the processor, and a storage device such as a memory. The arithmetic processing device reads necessary data and software from the memory, and executes arithmetic processing according to the software based on the data.

The real-machine input interface 410 includes a real-machine operation mechanism 411. The real-machine operation mechanism 411 includes a plurality of operation levers, which are disposed around the seat in the cab 43.

The plurality of real-machine sensors 412 include a plurality of posture sensors. The plurality of posture sensors serve as a posture information acquisition unit that acquires information on the posture of the work mechanism 44, specifically including: a boom angle sensor that detects a derricking angle of the boom 441 with respect to the upper turning body 42; an arm angle sensor that detects a rotational-movement angle of the arm 443 with respect to the boom 441; and a distal attachment angle sensor that detects a rotational-movement angle of the distal attachment 445 with respect to the arm 443. The plurality of real-machine sensors 412 further include a plurality of sensors that detect parameters related to the state of the work machine 40 other than the posture of the work mechanism 44, such as a hydraulic fluid pressure and a fuel remaining amount. Each of the real-machine sensors is configured to generate a signal corresponding to the value of the parameter to input the signal to the real-machine control device 400. The plurality of real-machine sensors 412 may further include a real-machine positioning device that measures the position (latitude and longitude) of the work machine 40. The real-machine positioning device is constituted by a GPS or a GNSS, and, if necessary, a gyro sensor or the like.

To the work mechanism 44 is attached a prism 12 that serves as an index mark. The prism 12 illustrated in FIG. 1A is attached to a proximal end of the arm 443. The proximal end is the end opposite to a distal end of the arm 443, being an end to be connected to the distal end of the boom 441. The prism 12 is attached to the arm 443 so as to swing about a rotational-movement axis as a swing axis along with the rotational movement of the arm 443 about the rotational-movement axis with respect to the boom 441. The prism 12 may be attached to an intermediate part, instead of the proximal end, of the arm 443. The prism 12, alternatively, may be attached to the boom 441. The prism 12 is, preferably, attached to the work mechanism 44 at a position away from the distal attachment 443, which is to come into direct contact with the work object, so as to allow the below-described detection of the position of the prism 12 to be made more reliably.

The storage device (or database) of the real-machine control device 400 stores prism attachment position information and work mechanism dimension information in advance. The prism attachment position information is information on a prism attachment position, which is the position at which the prism 12 is attached to the work mechanism 44. The work mechanism dimension information is information on respective dimensions of members that constitute the work mechanism 44. The prism attachment position information and the work mechanism dimension information are used for below-described forward-kinematical calculation of a position P(k) of a specified point of the work mechanism 44 based on a prism position P0(k), which is the position of the prism 12 in a three-dimensional space. The specified point is a point specified in the work mechanism 44 in advance.

The total station 10 constitutes an index-mark position detector that detects the prism position, namely, an index-mark position, in association with the prism 12. Specifically, the total station 10 performs: irradiating the prism 12 (or reflector) with laser light; detecting reflected light of the laser light, that is, the light reflected by the prism 12; determining a distance between the total station 10 and the prism 12 based on a time from the irradiation of the laser light to the detection of the reflected light; and calculating the three-dimensional position of the prism 12, namely, the prism position, based on the distance and the irradiation direction of the laser light.

The index-mark position detector is not limited to the combination of the total station 10 and the prism 12. The index-mark position detector is also allowable to be one which measures the three-dimensional position of the index mark in time series by use of other ranging devices and/or image sensors, such as a combination of laser trackers and reflectors or a combination of stereo cameras and markers.

The information processing device 20 is composed of, for example, a smartphone, a tablet terminal, a personal computer, or the like, to include a control device (computer), an input interface, and an output interface. The information processing device 20 has a function of outputting information sent to the information processing device 20 in the form of an image or the like.

The arithmetic processing device of the real-machine control device 400, which is a computer, is configured to read a real-machine state measurement program (for example, downloaded from a server) from the storage device and to execute the measurement of the position and azimuth of the work machine 40, specifically, the measurement of the position of the specified point and the azimuth of the upper turning body 42, in accordance with the real-machine state measurement program. Specifically, the real-machine control device 400 can serve as a specified-point position calculation unit and an azimuth calculation unit for the measurement. The specified-point position calculation unit calculates the specified-point position in a fixed control cycle based on the prism position detected by the total station 10 and the prism 12 serving as the index-mark position detector, namely, the index-mark position, and the posture information acquired by the plurality of posture sensors serving as the posture information acquisition unit. Only when a predetermined measurement permission condition is satisfied, the azimuth calculation unit calculates the azimuth of the machine body based on a previous specified-point position, which is the specified-point position calculated last time by the specified-point position calculation unit, and a current specified-point position, which is the specified-point position calculated this time by the specified-point position calculation unit.

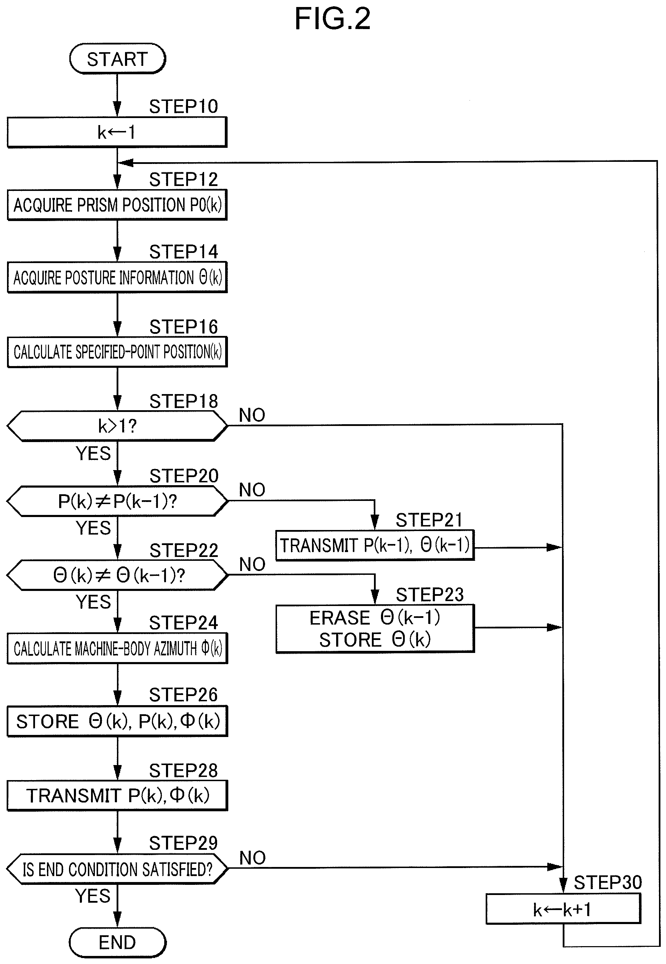

Specifically will be described the details of the measurement method to be performed by the real-machine control device 400 with reference to the flowchart of FIG. 2.

The real-machine control device 400 sets an index number k that represents the number of times of the control cycle to "1" (STEP 10).

The real-machine control device 400 acquires the position P0(k) of the prism 12 measured by the total station 10, namely, a real-space position or three-dimensional position, from the total station 10 through the real-machine wireless communication device 422 (STEP 12). The position P0(k) of the prism 12 can be determined based on the (known) position of the total station 10 in the real space and the position detected by the total station 10, that is, the relative position of the prism 12 to the total station 10.

The real-machine control device 400 acquires posture information Θ(k), which is information on the posture of the work mechanism 44, based on detection signals input by the plurality of posture sensors included in the plurality of real-machine sensors 412 (STEP 14). In the present embodiment, the posture information Θ(k) contains the boom angle that is the derricking angle of the boom 441, the arm angle that is the rotational-movement angle of the arm 443 with respect to the boom 441, and the distal attachment angle that is the rotational-movement angle of the distal attachment 445 with respect to the arm 443.

The real-machine control device 400 forward-kinematically calculates the specified-point position P(k) based on the prism attachment position information, the information on the prism position P0(k), which is the proximal end position of the arm 443 in the present embodiment, the posture information Θ(k), and the work mechanism dimension information (STEP 16). For the calculation of the azimuth, it is preferable that the specified point is a point whose specified-point position is likely to be changed, that is, a point in the distal end of the work mechanism 44 or in the vicinity thereof. In the present embodiment, the center point of the distal end of the distal attachment 445, that is, the pawl tip thereof, is set as the specified point.

The first calculation of the specified-point position P(k), that is, the calculation at the first control cycle (k=1), is executed on condition that the machine-body azimuth Φ(k) at the first time, namely, an initial machine-body azimuth Φ(1), is known. The machine-body azimuth Φ(k) is the azimuth of the upper turning body 42, which is the machine body, in a real space. In a case where the initial machine-body azimuth Φ(1) is unknown, it may be performed, in the next control cycle, that is, after the index number k becomes 2, to calculate the initial machine-body azimuth Φ(1) based on the initial prism position P0(1) and the prism position P0(2) in the second control cycle and to calculate the specified-point position P(1) based on the initial machine-body azimuth Φ(1) and the initial posture information Θ(1).

When the index number k is 1 (NO in STEP 18), the real-machine control device 400 increments the index number k by "1" (STEP 30), and repeats the processing after the acquisition processing of the prism position P0(k) (STEP 12).

When the index number k is greater than 1 (YES in STEP 18), that is, in the second and subsequent control periods, the real-machine control device 400 judges whether or not the specified-point position calculated in the current control cycle, namely, the current specified-point position P(k), is different from a previous specified-point position P(k-1), which is the specified-point position calculated last time (STEP 20).

When judging that the current specified-point position P(k) is not different from the previous specified-point position P(k-1) (NO in STEP 20), the real-machine control device 400 transmits the posture information Θ(k-1) and the machine-body azimuth Φ(k-1), which are acquired last time, to the information processing device 20 through the real-machine wireless communication device 422 (STEP 21). The posture information and the machine-body azimuth are, thus, kept as they are. The real-machine control device 400 thereafter increments the index number k by "1" (STEP 30), and subsequently repeats the processing after the acquisition processing of the prism position P0(k) (STEP 12).

When judging that the current specified-point position P(k) is different from the previous specified-point position P(k-1) (YES in STEP 20), the real-machine control device 400 judges whether or not the condition that the current azimuth information Θ(k) is different from the previous azimuth information Θ(k-1) is satisfied (STEP 22). The current posture information Θ(k) is the posture information acquired this time, that is, in the current control cycle, being posture information that corresponds to the current specified-point position P(k). Similarly, the previous posture information Θ(k-1) is the posture information acquired last time, that is, in the previous control cycle, being posture information that corresponds to the previous specified-point position P(k-1).

When judging that the current posture information Θ(k) is not different from the previous posture information Θ(k-1) (NO in STEP 22), the arithmetic processing device of the real-machine control device 400 erases the previous posture information Θ(k-1) from the storage device of the real-machine control device 400, more specifically, from a specified address of a memory in the storage device, and stores, in place thereof, the current posture information Θ(k) in the storage device (STEP 23). The absence of change in the posture information Θ(k) (NO in step S22) in spite of the change in the specified-point position P(k) (YES in step S20) means that the work mechanism 44 is translating or turning with the posture thereof kept. The change in the specified-point position P(k), therefore, makes no contribution to the measurement of the azimuth of the upper turning body 42. For the reason, the real-machine control device 400 increments the index number k by "1" (STEP 30) and thereafter repeats the processing after the acquisition processing of the prism position P0(k) (STEP 12) with no calculation of the machine-body azimuth Φ(k).

When judging that the current posture information Θ(k) is different from the previous posture information Θ(k-1) (YES in STEP 22), the real-machine control device 400 calculates the machine-body azimuth Φ(k) (step S24). Specifically, the azimuth calculation unit of the real-machine control device 400 according to the present embodiment determines a plane including the current specified-point position P(k) and the previous specified-point position P(k-1), and calculates the azimuth of the plane as the machine-body azimuth Φ(k), which is the azimuth of the machine body, namely, the upper turning body 42 in the present embodiment (STEP 24).

The arithmetic processing device of the real-machine control device 400 makes the current posture information Θ(k), the current specified-point position P(k), and the current machine-body azimuth Φ(k) stored in the storage device (STEP 26).

Furthermore, the real-machine control device 400 serves as also an information transmission unit, which transmits the current specified-point position P(k) and the current machine-body azimuth Φ(k) as work machine information, to the information processing device 20 through the real-machine wireless communication device 422 (STEP 28). This causes the information processing device 20 to output an image that represents the current specified-point position P(k) and the current machine azimuth Φ(k) from an image output device constituting the output interface.

The real-machine control device 400 judges whether or not a predetermined end condition is satisfied (STEP 29). The end condition is a condition for judging that the calculation of the machine-body azimuth Φ(k) and the like has become unrequired, including, for example, that the motion of the work machine 40 is stopped: specifically, that the cutoff lever is raised to prohibit the operation of the work machine 40; or that the engine of the work machine 40 is switched from ON to OFF.

When judging that the end condition is not satisfied (NO in STEP 29), the real-machine control device 400 increments the index number k by "1" (STEP 30), and subsequently repeats the processing after the processing of acquiring the prism position P0(k) (STEP 12). Then, at the time of judging that the end condition is satisfied (YES in STEP 29), the real-machine control device 400 ends the series of processing that have been described.

According to the measurement apparatus and the measurement method which have been described, not only the specified-point position P(k), which is the position of the specified point of the work mechanism 44, can be measured by use of the prism position P0(k) and the azimuth information Θ(k), but also the machine-body azimuth Φ(k), which is the azimuth of the upper turning body 42, can be measured in real time with a simple configuration by use of the previous specified-point position P(k-1) calculated in the previous control cycle and the current specified-point position P(k) calculated in the current control cycle. Moreover, the restricted performance of the calculation of the machine-body azimuth Φ(k) permitted only when the measurement permission condition that the current posture information Θ(k) is different from the previous posture information Θ(k-1) is satisfied (YES in STEP 22 and STEP 24) can prevent the machine-body azimuth Φ(k) from being calculated in a situation where there occurs a shift from the previous specified-point position P(k-1) to the current specified-point position P(k) in spite of no change in the posture of the work mechanism 44, specifically, a situation where the shift of the specified-point position is caused by only the translation of the upper turning body 42 or the turn of the upper turning body 42 with respect to the lower traveling body 41. This allows the accuracy of the measurement of the machine azimuth Φ(k) using the shift from the previous specified-point position P(k-1) to the current specified-point position P(k) due to a change in the azimuth of the work mechanism 44 to be improved.

The real-machine control device 400, transmitting the work machine information that contains the specified-point position P(k) and the machine-body azimuth Φ(k) to the information processing device 20 through the real-machine wireless communication device 422, can make the information processing device 20 output information on the work machine information or the state of the work machine 40 determined based on the work machine information. This allows a user of the information processing device 20 (a worker, etc.) to recognize the state of the work machine 40 in real time.

The present invention is not limited to the above embodiment but allowed to be variously modified.

For example, the azimuth calculation unit according to the present invention is not limited to one included in the real-machine control device 400 of the work machine 40. The azimuth calculation unit, alternatively, may be included in the control device 400 of the information processing device 20. Specifically, information on a time series of the prism position P0(k) may be transmitted from the total station 10 to the information processing device 20 and information on a time series of the work mechanism posture information Θ(k) may be transmitted from the work machine 40 to the information processing device 20, enabling the information processing device 20 to execute the processing shown in the flowchart of FIG. 2. In the flowchart, the transmission processing (STEP 21 and STEP 28) to the information processing device 20 is omittable.

The operation for moving the work machine according to the present invention is not limited to an operation by an operator getting in the cab 43, that is, an operation applied to an operation lever or the like included in the real-machine operation mechanism 411 in the cab 43. For example, the work machine 40 may be remotely operated by use of a remote operation device. In this case, the real-machine state measurement apparatus may be included in the remote operation device or a control device thereof, namely, a remote control device.

The measurement permission condition for permitting the calculation of the machine-body azimuth may further include an additional requirement in addition to the basic requirement that the current specified-point position P(k) is different from the previous specified-point position P(k-1). The additional requirement is, for example, that the specified-point position P(k) calculated based on the prism position P0(k) and the posture information Θ(k) coincides with an estimated specified-point position Pest (k), which is the position of the specified point estimated based on the previous specified-point position P(k-1) and a difference between the current posture information Θ(k) and the previous posture information Θ(k-1). The additional requirement makes it possible to calculate the machine-body azimuth Φ(k) only when the cause of the shift from the previous specified-point position P(k-1) to the current specified-point position P(k) is only a change in the azimuth of the work mechanism 44, in other words, to eliminate the calculation of the machine-body azimuth Φ(k) based on the shift of the specified-point position caused by the travel of the lower traveling body 41 or the turning of the upper turning body 42, thereby allowing the accuracy of the measurement of the machine-body azimuth Φ(k), which is the azimuth of the upper turning body 42, based on the shift from the previous specified-point position P(k-1) to the current specified-point position P(k) due to the change in the azimuth to be further improved.

The index-mark position detector according to the present invention is not limited to the combination of the prism 12 and the total station 10 that detects the three-dimensional position thereof. The index-mark position detector may be, for example, a GNSS including a GNSS antenna installed as the index mark at a position corresponding to the attachment position of the prism 12. The GNSS transmits information on the position of the GNSS antenna, namely, an index-mark position, to the real-machine control device 400 or the like through the real-machine wireless communication device 422 or wiring, thereby allowing the specified-point position to be calculated based on the index-mark position. This configuration eliminates the need for installing a total station at the site to thereby allow the real-machine state measurement apparatus to be simplified and allow the real-machine state measurement method to be easily executed.

As has been described, there is provided an apparatus and the like capable of measuring the position and azimuth of a work machine with a simple configuration.

Provided is a measurement apparatus for measuring a position and an azimuth of a work machine including a machine body and a work mechanism that extends from the machine body and is movable to change a posture. The measurement apparatus includes an index mark, an index-mark position detector, a posture information acquisition unit, a specified-point position calculation unit, and an azimuth calculation unit. The index mark is attached to the work mechanism. The index-mark position detector detects an index-mark position which is a position of the index mark. The posture information acquisition unit acquires posture information that is information on the posture of the work mechanism. Based on the index-mark position detected by the index-mark position detector and the posture information acquired by the posture information acquisition unit, the specified-point position calculation unit calculates a specified-point position, which is a position of a specified point that is specified in advance at a position different from the index-mark position in the work mechanism, in a fixed control cycle. Only when a predetermined measurement permission condition is satisfied, the azimuth calculation unit calculates an azimuth of the machine body based on a previous specified-point position, which is the specified-point position calculated last time by the specified-point position calculation unit, and a current specified-point position, which is the specified-point position calculated this time by the specified-point position calculation unit. The measurement permission condition includes that current posture information, which is the posture information corresponding to the current specified-point position, is different from previous posture information, which is the posture information corresponding to the previous specified-point position.

The measurement apparatus allows the specified-point position which is the position of the specified point in the work mechanism and the azimuth of the machine body to be measured with a simple configuration. In addition, the calculation of the machine-body azimuth is performed only when the measurement permission condition including that the current posture information is different from the previous posture information is satisfied, which enables the machine-body azimuth to be prevented from being calculated based on the shift of the specified-point position in a situation where the shift from the previous specified-point position to the current specified-point position is caused in spite of no change in the posture of the work machine, that is, in spite that the shift of the specified-point position is caused by only the movement of the machine body. This allows the accuracy of the measurement of the machine-body azimuth using the shift from the previous specified-point position to the current specified-point position due to a change in the posture of the work mechanism to be improved.

For example, the azimuth calculation unit can calculate the azimuth of the plane including the previous specified-point position and the current specified-point position as the azimuth of the machine body.

It is preferable that the measurement permission condition further includes that the current specified-point position coincides with an estimated specified-point position. The estimated specified-point position is the specified-point position estimated based on the previous specified-point position and a difference between the current posture information and the previous posture information. This makes it possible to calculate the machine-body azimuth only when the shift from the previous specified-point position to the current specified-point position is caused by only a change in the posture of the work mechanism, in other words, to eliminate the calculation of the machine-body azimuth based on the shift of the specified-point position caused by the movement of the machine body, thereby allowing the accuracy of the measurement of the machine-body azimuth based on the shift from the previous specified-point position to the current specified-point position due to the change in the posture to be further improved.

The restriction of the calculation of the machine-body azimuth by the measurement permission condition is particularly effective for the case where the machine body is an upper turning body mounted on a lower traveling body of a work machine so as to be capable of turning and the work mechanism is attached to the upper turning body such that the specified point is turned together with the upper turning body with respect to the lower traveling body. Although this case may involve also a change in the specified-point position caused by turning of the upper turning body, the measurement permission condition can effectively inhibit the machine-body azimuth from being calculated based on the shift of the specified-point position due to the turn of the upper turning body.

The specified point is preferably located at a position closer to a tip of the work mechanism than the index mark attached to the work mechanism. This disposition enables the calculation of the machine azimuth based on the specified-point position to be more reliably performed. Specifically, locating the index mark at a position away from the distal end of the work mechanism, which is a part likely to come into contact with the work object, reduces the influence to be applied upon the index mark by a work object, while specifying the specified point to the tip of the work mechanism, the tip being a part to be remarkably moved, allows the calculation of the azimuth based on the change in the specified-point position, that is, the shift from the previous specified-point position to the current specified-point position, to be performed with high accuracy.

Specifically, in a case where the work mechanism includes a boom capable of derricking with respect to the machine body, an arm connected to a distal end of the boom so as to be rotationally movable, and a distal attachment connected to a distal end of the arm so as to be rotationally movable, it is preferable that the index mark is attached to the arm and the specified point is specified in the distal attachment. In this case, the posture information acquired by the posture information acquisition unit, if containing a rotational-movement angle of the arm with respect to the boom and a rotational-movement angle of the distal attachment with respect to the arm, enables the specified-point position in the distal attachment and the machine-body azimuth to be calculated based on the index-mark position in the arm.

It is preferable that the measurement apparatus further includes an information transmission unit. The information transmission unit transmits work machine information containing the specified-point position and the azimuth of the machine body to an information processing device, thereby enabled to make the information processing device output the work machine information or a state of the work machine determined based on the work machine information. The output allows a user of the information processing device to recognize a state of the work machine.

Also provided is a measurement method for measuring a position and an azimuth of the work machine, including: detecting an index-mark position which is a position of an index mark attached to the work mechanism; acquiring information on a posture of the work mechanism; calculating a specified-point position, which is a position of a specified point prespecified at a position different from the index-mark position in the work mechanism, at a fixed control cycle based on the detected index-mark position and the acquired posture information; and calculating an azimuth of the machine body based on a current specified-point position which is the specified-point position calculated this time and a previous specified-point position which is the specified-point position calculated last time, only when a predetermined measurement permission condition is satisfied. The measurement permission condition includes that the current posture information, which is the posture information corresponding to the current specified-point position, is different from the previous posture information, which is the posture information corresponding to the previous specified-point position.

Also provided is a program capable of being read by a computer to thereby make the computer execute the measurement method.

## Claims

1. A measurement apparatus for measuring a position and an azimuth of a work machine including a machine body and a work mechanism extending from the machine body and is movable to change a posture, the measurement apparatus comprising:
an index mark attached to the work mechanism;
an index-mark position detector that detects an index-mark position, which is a position of the index mark;
a posture information acquisition unit that acquires posture information that is information on the posture of the work mechanism;
a specified-point position calculation unit that calculates a specified-point position, which is a position of a specified point that is specified in advance at a position different from the index-mark position in the work mechanism, in a fixed control cycle based on the index-mark position detected by the index-mark position detector and the posture information acquired by the posture information acquisition unit; and
an azimuth calculation unit that calculates an azimuth of the machine body based on a previous specified-point position, which is the specified-point position calculated last time by the specified-point position calculation unit, and a current specified-point position, which is the specified-point position calculated this time by the specified-point position calculation unit, only when a predetermined measurement permission condition is satisfied, wherein
the measurement permission condition includes that current posture information, which is the posture information corresponding to the current specified-point position, is different from previous posture information, which is the posture information corresponding to the previous specified-point position.

2. The measurement apparatus according to claim 1, wherein the azimuth calculation unit is configured to calculate, as the azimuth of the machine body, an azimuth of a plane including the previous specified-point position and the current specified-point position.

3. The measurement apparatus according to claim 1 or 2, wherein the measurement permission condition further includes that the current specified-point position coincides with an estimated specified-point position, which is the specified-point position estimated based on the previous specified-point position and a difference between the current posture information and the previous posture information.

4. The measurement apparatus according to any one of claims 1 to 3, wherein the machine body is an upper turning body mounted on the lower traveling body so as to be capable of turning with respect to a lower traveling body of the work machine, and the work mechanism is attached to the upper turning body such that the specified point is turned together with the upper turning body with respect to the lower traveling body.

5. The measurement apparatus according to any one of claims 1 to 4, wherein the specified point is located at a position closer to a tip of the work mechanism than the index mark attached to the work mechanism.

6. The measurement apparatus according to claim 5, wherein: the work mechanism includes a boom capable of derricking with respect to the machine body, an arm connected to a distal end of the boom so as to be rotationally movable, and a distal attachment connected to a distal end of the arm so as to be rotationally movable; the index mark is attached to the arm; the specified point is specified in the distal attachment; and the posture information acquired by the posture information acquisition unit contains a rotational-movement angle of the arm with respect to the boom and a rotational-movement angle of the distal attachment with respect to the arm.

7. The measurement apparatus according to any one of claims 1 to 6, further comprising an information transmission unit, which is configured to transmit work machine information containing the current specified-point position and the azimuth of the machine body to an information processing device to make the information processing device output the work machine information or a state of the work machine, the state determined based on the work machine information.

8. A measurement method for measuring a position and an azimuth of a work machine including a machine body and a work mechanism that extends from the machine body and is movable to change a posture, the measurement method comprising:
detecting an index-mark position which is a position of an index mark attached to the work mechanism;
acquiring an index-mark information which is information on a posture of the work mechanism;
calculating a specified-point position, which is a position of a specified point specified in advance at a position different from the index-mark position in the work mechanism, at a fixed control cycle based on the detected index-mark position and the acquired posture information; and
calculating an azimuth of the machine body based on a current specified-point position which is the specified-point position calculated this time and a previous specified-point position which is the specified-point position calculated last time, only when a predetermined measurement permission condition is satisfied, wherein
the measurement permission condition includes that the current posture information, which is the posture information corresponding to the current specified-point position, is different from the previous posture information, which is the posture information corresponding to the previous specified-point position.

9. A program that can be read by a computer to thereby make the computer execute the measurement method according to claim 7.
